# EUROPEAN PATENT APPLICATION

(11) **EP 1 054 556 A2**
(43) Date of publication of application: **22.11.2000**
(21) Application number: 00303893.2
(22) Date of filing: 09.05.2000
(51) Int. Cl.: H04N 1/00

(54) **Print order receiving system**

(30) Priority: 14.05.1999 JP 13412499; 14.05.1999 JP 13412599
(71) Applicant: KONICA CORPORATION, Tokyo (JP)
(72) Inventor: Ueda, Yutaka, Hino-shi, Tokyo (JP); Sawada, Katsutoshi, Hino-shi, Tokyo (JP); Uemura, Hiroyuki, Hino-shi, Tokyo (JP)
(74) Representative: Nicholls, Michael John

(57) **Abstract**

A print producing system is provided with a print order receiving device having a first reader for reading image data from a first removable media in which the image data to be printed are stored, and a memory for storing the image data read by the first reader in a second removable media; and a print producing apparatus having a second reader for reading the image data stored in the second removable media, and a printer for producing a print based on the image data read by the second reader.

## Description

### BACKGROUND OF THE INVENTION

The present invention relates to a print order receiving device, an external communicating apparatus, and a print producing apparatus, and more particularly, to a print order receiving device, an external communicating apparatus, and a print producing apparatus which can accept orders easily.

There have been developed digital cameras wherein optical images of an object are converted into digital image data and are recorded in a memory card, and they are already on the market. Since the digital camera is usually provided with a liquid crystal panel for display of images, it is possible to make the liquid crystal panel to display images which are picked up on he liquid crystal panel based on image data recorded.

Differently from silver halide photographs, an image displayed on a liquid crystal panel of the digital camera has a problem that it is a tentative one which disappears when a power source of the digital camera, for example, is turned off, and display on on a liquid crystal panel is not appropriate for appreciation of images for a long time. When an image needs to be offered to each person after plural persons are subjected to image pick-up by a digital camera as objects, there is a problem that each person having no display means for images can not appreciate the image even if the person is offered a recording medium on which copied image data are recorded, although the image data themselves can be copied on another recording medium.

On the contrary, it is possible read image data recorded on a recording medium into a personal computer and thereby to indicate them on a display, or to print images through a printer connected to the personal computer. However, since a peripheral equipment such as a personal computer and a printer is usually expensive, it is not necessarily possible for all persons who want to appreciate images picked up by a digital camera to use a personal computer. Therefore, there is a demand for a system which makes it possible to appreciate more simply the images picked up by a digital camera.

For the demand stated above, there is considered service for printing images based on image data obtained through image pick-up by, for example, a digital camera. In such service, when a customer brings to a photo-finishing laboratory a recording medium on which the customer recorded image data, the image data are outputted as prints inside the laboratory, and the prints are handed to the customer in exchange for a prescribed charge. A customer who utilizes this service does not need to have any special apparatus for printing images, and can obtain prints simply in the same way as in silver halide photography.

Incidentally, when obtaining high image quality which is the same as that in silver halide photographs in the case of forming images based on image data picked up by a digital camera, a simple equipment such as a general purpose printer which can be connected to a personal computer is not enough, and an image forming apparatus having higher accuracy is needed. Since the image forming apparatus of this kind is relatively high in price at this moment, possibility for the image forming apparatus to be introduced widely and rapidly is low. Until the image forming apparatuses are introduced widely, therefore, the service for making prints from images of a digital camera is considered to take the form wherein after orders from customers are accepted at plural wholesale distributors, for example, these orders are sent to an image forming apparatus installed at a specific location for printing desired images, and print images are offered to the customers through the wholesale distributors who accepted orders.

In this case, how the orders of customers are accepted at wholesale distributors and how they are transmitted to the image forming apparatus are key issues. Namely, for printing images, it is necessary to receive from customers their order information such as, for example, how many prints should be made from which desired images, in addition to image data from a digital camera which picked up images, and to input the information appropriately in the image forming apparatus. However, if this order information is hand-written in the wholesale distributor one by one to make a memorandum, and inputting into the image forming apparatus is conducted manually by looking at the memorandum, it takes much time, and there is a fear of erroneous order resulting from poor communication between customers and wholesale distributors.

Further, it is considered that customers do not want prints for some images picked up, and it is convenient if it is possible to prevent in advance that such images are printed. For that purpose, the customer needs to specify, in the case of ordering, the images whose prints are not desired by the customer. In this case, if the customer needs to carry its digital camera only for showing the images whose prints are not desired, it is inconvenient.

In addition to the foregoing, if it is possible to make a print for a business card and a post card, for example, in a form desired by a customer, it would be convenient. In this case, if it is possible to compose handwritten characters with images of an object and thereby to print them on a business card or a post card, the business card or the postcard may be more attractive in terms of friendly feeding.

Further, if it is possible to make information concerning print orders to be a data base, inquiries of customers may be answered promptly, which is convenient.

### SUMMARY OF THE INVENTION

In view of the problems in the prior art, a first object of the invention is to provide a print order receiving device which makes it possible to order prints easily from images picked up by a digital camera, for example.

Further, a second object of the invention is to provide a technology which makes it possible to conduct easily image processing related to handwritten characters, and to control easily print order information.

The above object can be attained by the following structures.
(1-1) A print producing system, comprises:
   a print order receiving device comprising
      first reading means for reading image data from a first removable media in which the image data to be printed are stored, and
      storing means for storing the image data read by the first reading means in a second removable media; and
   a print producing apparatus comprising
      second reading means for reading the image data stored in the second removable media, and
      printing means for producing a print based on the image data read by the second reading means.
(1-2) In the print producing system of (1-1), the print order receiving device stores print order information in the second removable media and further stores print non-conducted information in association with the image data corresponding to the print order information.
(1-3) In the print producing system of (1-1), the print producing apparatus stores print-conducted information in the second removable media in association with the image data for which a print is produced.
(1-4) In the print producing system of (1-2), the print order information includes at least one of print finishing information and customer information.
(1-5) In the print producing system of (1-4), the print order information includes the print finishing information and the print finishing information is information regarding at least one of finishing color and finishing image quality.
(1-6) In the print producing system of (1-1), the print order receiving device further comprises data forming means for converting a handwritten letter or a handwritten figure used for a print order into image data representing the handwritten letter or the handwritten figure, and the storing means stores the image data representing the handwritten letter or the handwritten figure in correlation with the image data stored in the second removable media.
(1-7) In the print producing system of (1-1), the print producing system further comprises:
   a memory to store a data base to administrate the print order information,
   wherein in the data base, information regarding a customer name and/or an order receipt number is stored in correlation with information as to whether there are stored image data for which a print has been already produced in response to a print producing order of the customer.
(1-8) In the print producing system of (1-1), the print producing system further comprises:
   a memory to store a data base to administrate the print order information,
   wherein in the data base, information regarding a customer name and/or an order receipt number is stored in correlation with information as to whether a print is produced based on the image data for which the customer requests to produce a print.
(1-9) In the print producing system of (1-1), the print producing system further comprises:
   a memory to store a data base to administrate the print order information,
   wherein in the data base, information regarding a customer name and/or an order receipt number is stored in correlation with discriminating information of the second removable media in which the image data ordered to be printed by the customer are stored.
(1-10) A print receiving device, comprises:
   reading means for reading image data from a media in which image data are stored;
   indicating means for indicating images based on the image data read by the reading means;
   selecting means for selecting an image to be printed from the images indicated by the indicating means;
   inputting means for inputting print order information corresponding to the image selected by the selecting means;
   transmitting means for transmitting at least one of the image data corresponding to the image selected by the selecting means and the print order information inputted by the inputting means to an external communicating apparatus; and
   receiving means for receiving from the external communication apparatus receipt information that the external communication apparatus has received at least one of the image data and the print order information.
(1-11) In the print receiving device of (1-10), the print order information includes at least one of print finishing information and customer information.
(1-12) In the print receiving device of (1-10), the print order information includes the print finishing information and the print finishing information is information regarding at least one of finishing color and finishing image quality.
(1-13) In the print receiving device of (1-10), the print order receiving device further comprises data forming means for converting a handwritten letter or a handwritten figure used for a print order into image data representing the handwritten letter or the handwritten figure, and the storing means stores the image data representing the handwritten letter or the handwritten figure in correlation with the image data stored in the second removable media.
(1-14) In the print receiving device of (1-10), the print receiving device further comprises:
   a memory to store a data base to administrate the print order information,
   wherein in the data base, information regarding a customer name and/or an order receipt number is stored in correlation with information as to whether there are stored image data for which a print has been already produced in response to a print producing order of the customer.
(1-15) In the print receiving device of (1-10), the print receiving device further comprises:
   a memory to store a data base to administrate the print order information,
   wherein in the data base, information regarding a customer name and/or an order receipt number is stored in correlation with information as to whether a print is produced based on the image data for which the customer requests to produce a print.
(1-16) In the print receiving device of (1-10), the external communication apparatus comprises a transmitting device to transmit the receipt information when the print receiving device transmits at least one of the image data and the print order information.

Further, the above object may be attained by the following preferable structures.
(2-1) To attain the object stated above, the print order receiving device of the invention has therein a reading means to read image data from a medium on which the image data are recorded, an image display means which displays images based on image data read out by the reading means, a selection means which selects images to be printed from images displayed by the image display means, and a confirmation means which confirms the selected image, and under the condition of selection confirmation of the image conducted by the confirmation means, image data corresponding to the selection-confirmed image are recorded on a recording area determined in advance.
(2-2) In the print order receiving device of (2-1), the print order receiving device further comprises inputting means for inputting print order information corresponding to the image to be printed, and the print order information inputted by the inputting means is recorded in the predetermined recording area in correlation with the selected image.
(2-3) In the print order receiving device of (2-2), the inputting means comprises a touch-panel type information inputting device.
(2-4) In the print order receiving device of (2-2), the inputting means comprises a reading device capable of reading characters and numerals.
(2-5) In the print order receiving device of one of (2-1) to (2-4), the print order receiving device further comprises a recording means capable of recording the image data read by the reading means in a memory medium and the predetermined recording area is provided in the memory medium in which the image data are written by the recording medium.
(2-6) In the print order receiving device of one of (2-1) to (2-5), the print order receiving device further comprises transmitting device capable of transmitting the image data read by the reading means and the predetermined recording area is provided to a transmission destination to which the image data is transmitted by the transmitting means.
(2-7) In the print order receiving device of one of (2-1) to (2-6), the print order receiving device further comprises changing means for changing the predetermined recording area.
(2-8) The print order receiving device of the invention has therein a reading means to read image data from a medium on which the image data are recorded, an image display means which displays images based on image data read out by the reading means, a selection means which selects images to be printed from images displayed by the image display means, and a detection means which detects that the reading means becomes capable of reading image data from the medium, and responding to the detection of the detection means, the image display means displays images in a display mode based on the image data obtained through reading by the reading means.
(2-9) In the print order receiving device of (2-8), the image display means all images corresponding to the image data read by the reading means on a single screen in response to the detection by the detecting means.
(2-10) The print order receiving device of the invention has therein a reading means to read image data from a medium on which the image data are recorded, an image display means which displays images based on image data read out by the reading means, a selection means which selects images to be printed from images displayed by the image display means, an inputting means which inputs print order information corresponding to the images selected by the selection means, a recording means which records image data corresponding to the image selected by the selection means and print order information inputted by the inputting means on a recording area determined in advance by making the image data and the print order information to correspond to each other, and a recording means which records prescribed information in the aforesaid print order information on a backup area which is different from the aforesaid recording area determined in advance.
(2-11) In the print order receiving device of (2-10), the backup area is formed in a memory built in the print order receiving device.
(2-12) In the print order receiving device of (2-10), the backup area is formed in a memory in which the image data for a print are stored.
(2-13) A print order receiving device of the invention has therein a reading means to read image data from a medium on which the image data are recorded, an image display means which displays images based on image data read out by the reading means, a selection means which selects images to be printed from images displayed by the image display means, an inputting means which inputs print order information corresponding to the images selected by the selection means, and, a recording means which records image data corresponding to the image selected by the selection means and print order information inputted by the inputting means on a recording medium by making the image data and the print order information to correspond to each other, and recordable capacity of an area of the recording medium where image data are recorded is greater than the recordable capacity of the medium under the state that both areas are empty.
(2-14) In the print order receiving device of (2-13), the print order receiving device further comprises inhibiting means inhibits the recording means to conduct the recording when a remaining area of the memory medium capable of recording image data therein becomes smaller than an amount of image data to be recorded.
(2-15) In the print order receiving device of (2-13), the image data recorded in the memory medium is eliminated when new data are recorded.
(2-16) The print order receiving device of the invention has therein a reading means to read image data from a medium on which the image data are recorded, an image display means which displays images based on image data read out by the reading means, a selection means which selects images to be printed from images displayed by the image display means, an inputting means which inputs print order information corresponding to the images selected by the selection means, a means to transmit at least one of the image data corresponding to the image selected by the selection means and the print order information inputted by the inputting means to an external communicating equipment, and a receiving means which receives from the external communicating equipment the delivery information indicating that at least one of the image data and the print order information has been transmitted.
(2-17) In the print order receiving device of (2-16), the external communicating means comprises a transmitting device to transmit receipt information telling transmission when at least one of the image data and the print order information is transmitted by the print order receiving device.
(2-18) A print producing system of the invention has therein a print order receiving device having a reading means which reads image data from the first removable medium in which the image data for making prints are recorded, and a recording means which records the image data read by the reading means on the second removable medium, a reading means which reads the image data from the second removable medium in which the image data are recorded, and a print making apparatus which makes prints based on the image data read out of the second removable medium.
(2-19) In the print producing system of (2-18), the print order receiving device stores print order information in the second removable media and further stores print non-conducted information in association with the image data corresponding to the print order information.
(2-20) In the print producing system of (2-18), the print producing apparatus stores print-conducted information in the second removable media in association with the image data for which a print is produced.
   In the print order receiving device of the invention having therein a reading means to read image data from a medium on which the image data are recorded, an image display means which displays images based on image data read out by the reading means, a selection means which selects images to be printed from images displayed by the image display means and a confirming means which confirms the selected image, image data corresponding to the selected and confirmed image are recorded on a recording area determined in advance under the condition that the image has been selected and confirmed by the confirming means. Therefore, when accepting print order, for example, image data are recorded automatically even when an operator of the print order receiving device does not designate a recording area, which makes it easy to accept print ordering.
   Further, if an arrangement is made by providing an inputting means which inputs print order information corresponding to images to be printed, so that print order information inputted by the inputting means are recorded on the recording area determined in advance to correspond to the selected image, it is possible to keep a relation for correspondence to the images to be printed, which is preferable.
   Further, if an information inputting apparatus of a touch panel type is included in the inputting means stated above, operation sections such as buttons other than a panel are reduced, which makes appearance of the print order receiving device to be more simple.
   If a reading device capable of reading characters and figures is included in the inputting means stated above, handwritten characters, for example, can be read and transformed into order information, which makes information inputting to be easy.
   Further, if there is provided a recording means capable of recording image data read out by the reading means on a recording medium, and the recording area determined in advance is provided on a recording medium on which image data are written by the recording means, it is possible to make an external image forming apparatus to read contents of the recording medium, and thereby to conduct the desired image forming easily.
   On the other hand, if a transmitting means capable of transmitting image data read out by the reading means is provided, and the recording area determined in advance is provided at a location to which image data are transmitted by the transmitting means, it is possible to transmit image data to an external image forming apparatus representing the aforesaid location through public line, for example, and thereby to conduct the desired image forming rapidly and easily.
   If there is provided a changing means capable of changing the recording area determined in advance, it is possible to change a recording area according to circumstances between a recording medium and an image forming apparatus, for example, which is convenient.
   In the print order receiving device of the invention having therein a reading means to read image data from a medium on which the image data are recorded, an image display means which displays images based on image data read out by the reading means, a selection means which selects images to be printed from images displayed by the image display means and a detection means which detects that the reading means has become capable of reading image data from the aforesaid medium, the image display means displays, responding to detection made by the detection means, the images in the display mode determined in advance, based on image data which are read out by the reading means. Therefore, when accepting print order, for example, even when an operator of the print order receiving device does not designate image display, it is possible to designate easily images for which an orderer desires prints by arranging so that all images are automatically displayed, for example, which makes it possible to order prints easily.
   If the image display means displays, responding to detection made by the detection means, all images corresponding to image data read out by the reading means on one image plane, an orderer can designate, at a glance, the images for which prints are desired, which makes it possible to order prints more easily.
   In the print order receiving device of the invention having therein a reading means to read image data from a medium on which the image data are recorded, an image display means which displays images based on image data read out by the reading means, a selection means which selects images to be printed from images displayed by the image display means, an inputting means which inputs print order information corresponding to the image selected by the selecting means, a recording means which records image data corresponding to the image selected by the selecting means and print order information inputted by the inputting means on the recording area determined in advance so that the image data and the print order information are made to correspond to each other, and a recording means which records prescribed information in the print order information on thebackup area which is different from the recording area determined in advance, a person who accepted an order for prints can confirm, by recording the number of prints and a date of finish as the prescribed information, for example. Due to this, it is possible to urge prints when the prints are delayed, or it is possible to check whether contents of prints are correct or not, when the prints are finished.
   Further, when the backup area is formed in a memory built in the print order receiving device, it is possible to call the recorded prescribed information more easily.
   On the other hand, when the backup area is formed in a recording medium on which image data are recorded for prints, it is possible to double check orders for prints.
   In the print order receiving device of the invention having therein a reading means to read image data from a medium on which the image data are recorded, an image display means which displays images based on image data read out by the reading means, a selection means which selects images to be printed from images displayed by the image display means, an inputting means which inputs print order information corresponding to the image selected by the selecting means, and a recording means which records image data corresponding to the image selected by the selecting means and print order information inputted by the inputting means on the recording medium so that the image data and the print order information are made to correspond to each other, recordable capacity of an area of the recording medium where image data are recorded is greater than the recordable capacity of the medium under the state that both areas are empty. Therefore, even in the case of image data accumulated to fill the entire capacity of the medium, the image data can be recorded on the aforesaid area without being split.
   Further, if a prohibiting means which prohibits recording operations of the recording means is provided, it is possible to prevent that image data are split to be recorded when a recordable residual amount of the area where image data are recorded in the aforesaid recording medium becomes smaller than an amount of image data recorded on the medium stated above.
   On the other hand, if an arrangement is made so that image data recorded on the recording medium are erased when new image data are recorded, recordable capacity of the area in the recording medium where image data are recorded is greater than that of the aforesaid medium inevitably, when new image data re recorded. Therefore, even in the case of image data accumulated to fill the entire capacity of the medium, the image data can be recorded on the aforesaid area without being split.
   In the print order receiving device of the invention having therein a reading means to read image data from a medium on which the image data are recorded, an image display means which displays images based on image data read out by the reading means, a selection means which selects images to be printed from images displayed by the image display means, an inputting means which inputs print order information corresponding to the image selected by the selecting means, a means to transmit at least one of the image data corresponding to the image selected by the selection means and print order information inputted by the inputting means, and a receiving means which receives the delivery information showing that at least one of the image data and the print order information mentioned above has been transmitted, it is possible to learn, based on the delivery information mentioned above, that at least one of the image data and the print order information stated above has been transmitted to the external communication device. It is therefore possible to prevent an error that the same image data and print order information are transmitted repeatedly.
   Incidentally, it is preferable that the external communication device has a sending device which transmits the delivery information showing the aforesaid transmission when at least one of the image data and the print order information has been transmitted from the print order receiving device.
   Since a print producing system of the invention has therein a print order receiving device having a reading means which reads image data from the first removable medium in which the image data to be printed are recorded, and a recording means which records the image data read by the reading means on the second removable medium, a reading means which reads the image data from the second removable medium in which the image data are recorded, and a print making apparatus which makes prints based on the image data read out of the second removable medium, it is possible to transfer image data from the print order receiving device to the print making apparatus through the second removable medium, even when the print order receiving device and the print making apparatus are not put on the on-line system, and thereby to make an installation of the print order receiving device to be easy.
   If it is possible for the print order receiving device to record print order information corresponding to the image data on the second removable medium and to record print-unprocessed information, corresponding to image data on which the corresponding print order information is recorded, an operator of the print order receiving device can learn immediately, when receiving an inquiry about prints from a customer, whether the prints for the customer have been completed or not, by reading the print-unprocessed information, which is convenient.
   On the other hand, if it is possible for the print making apparatus to record print-processed information corresponding to the image data for which prints have been made on the second removable medium, an operator of the print order receiving device can learn immediately, when receiving an inquiry about prints from a customer, whether the prints for the customer have been completed or not, by reading the print-processed information, which is convenient.
(2-21) To attain the second objects stated above, the print producing system of the invention is characterized to have therein a means to make data which makes handwritten characters or graphics both for print ordering to be image data, a corresponding means which makes image data related to an object and image data of the handwritten characters and graphics to correspond to each other, and a processing means which conducts print processing based on image data related to the object and image data of the handwritten characters and graphics.
(2-22) In the print producing system of (2-21), the data forming means is a flat-bed type scanner.
(2-23) In the print producing system of (2-21), the data forming means is a digital still camera.
(2-24) In the print producing system of (2-21), the data forming means is a touch panel type reading device to read characters written by a pen or figures written by a pen.
(2-25) A storage device of the invention is one which stores data base for controlling print order information, and it is characterized in that the data base stores therein information relating to a customer name and/or an order number and information relating to customer's request for prints and to whether the image data for which the prints are already made are stored or not, so that both pieces of information may correspond to each other.
(2-26) A storage device of the invention is one which stores data base for controlling print order information, and it is characterized in that the data base stores therein information relating to a customer name and/or an order number and information relating to whether or not prints are made based on image data for which the customer requested prints so that both pieces of information may correspond to each other.
(2-27) A storage device of the invention is one which stores data base for controlling print order information, and it is characterized in that the data base stores therein information relating to a customer name and/or an order number and identification information for a removable medium wherein image data for which the customer requested prints so that both pieces of information may correspond to each other.

Since a print producing system of the invention has therein a means to make data which makes handwritten characters or graphics both for print ordering to be image data, a corresponding means which makes image data related to an object and image data of the handwritten characters or graphics to correspond to each other, and a processing means which conducts print processing based on the image data related to an object and the image data of handwritten characters or graphics, it is possible to read customer's handwritten characters and graphics and thereby to compose them with images of an object, when prints are requested to be made in a form, for example, of a business card or a post card. Incidentally, characters or graphics mentioned here are defined to be a concept including also alphanumeric expressions and symbols.

Incidentally, it is preferable that the means to make data stated earlier includes a flatbed scanner, a digital still camera or a touch panel type reading device which reads handwritten characters or graphics.

A storage apparatus of the invention is one which stores data base that controls print order information, and in the data base, there are stored information relating to a customer name and/or an order acceptance number and information showing whether image data for which the prints have been made based on the request of the customer for making prints exist or not, in a way wherein the aforesaid two pieces of information correspond to each other. Therefore, when existence of image data for reordering needs to be known regarding a print order of a certain customer, for example, it is possible to grasp quickly the state of survival of image data by accessing the storage apparatus wherein data base is stored.

A storage apparatus of the invention is one which stores data base that controls print order information, and in the data base, there are stored information relating to a customer name and/or an order acceptance number and information showing whether prints have been made based on the image data for which the customer requested to make prints in a way wherein the aforesaid two pieces of information correspond to each other. Therefore, when the current state needs to be known regarding a print order of a certain customer, for example, it is possible to grasp quickly whether the prints requested by the customer have not been completed or not, by accessing the storage apparatus wherein data base is stored.

A storage apparatus of the invention is one which stores data base that controls print order information, and in the data base, there are stored information relating to a customer name and/or an order acceptance number and identification information for a removable medium wherein image data for which the customer requested to make prints are recorded in a way wherein the aforesaid two pieces of information correspond to each other. Therefore, when the number of the removable medium wherein the print order information is recorded needs to be known regarding a print order of a certain customer, for example, it is possible to know quickly the aforesaid number by accessing the storage apparatus wherein data base is stored.

### BRIEF DESCRIPTION OF THE DRAWINGS

Fig. 1 is a perspective view of a print order receiving device in the first embodiment.
Fig. 2 is a diagram illustrating operations of a print order receiving device in the present embodiment
Fig. 3 is a diagram for illustrating the second embodiment.
Fig. 4 is a diagram for illustrating the third embodiment.
Fig. 5 is a diagram for illustrating the fourth embodiment.
Fig. 6 is a diagram for illustrating the fifth embodiment.
Fig. 7 is a perspective view of a print making apparatus (image forming apparatus) related to the present embodiment.
Fig. 8 is a block diagram showing the structure of the print making apparatus.
Fig. 9 is a diagram showing contents of data base for controlling print orders.

### DETAILED DESCRIPTION OF THE PREFERRED EMBODIMENT

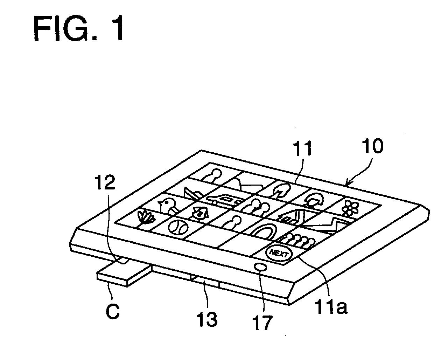

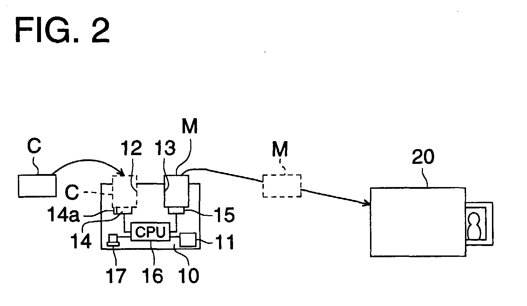

The present invention will be explained as follows, referring to the embodiment. Fig. 1 is a perspective view of a print order receiving device related to the first embodiment. In Fig. 1, print order receiving device 10 is rectangular-plate-shaped, and it has, on its upper surface, liquid crystal image plane 11 of a touch panel type and power supply switch 17. Further, two openings 12 and 13 are formed on the lower portion of the front side of the print order receiving device 10. In each of the openings 12 and 13, there is respectively formed reading device 14 and recording device 15 (Fig. 2) both for image data. The opening 12 can accept freely removable medium C on which image data corresponding to images picked up by a digital camera are recorded, for example, an IC card, while, the opening 13 can accept freely removable medium M, for example, an IC card. It is preferable that the removable medium M is greater than the removable medium C in terms of storage capacity in the state of absence of stored data, namely, in the state of empty. Incidentally, the removable media C and M are not limited to the PC card and IC card indicated here.

Fig. 2 is a diagram illustrating operations of a print order receiving device related to the present embodiment. In Fig. 2, print order receiving device 10 has therein reading device 14 capable of reading image data from removable medium C inserted in opening 12, recording device 15 capable of recording image data and print order information which will be described later on removable medium M inserted in opening 13 and CPU 16 which is connected to the aforesaid two items. The reading device 14 is equipped with sensor 14a which detects that removable medium C is inserted in opening 12 and reading of image data becomes to be possible, and outputs signals showing that reading is possible. Incidentally, CPU 16 is arranged to be possible to input prescribed information from liquid crystal image plane 11 of a touch panel type and to display prescribed image on the liquid crystal image plane 11 through an unillustrated driver.

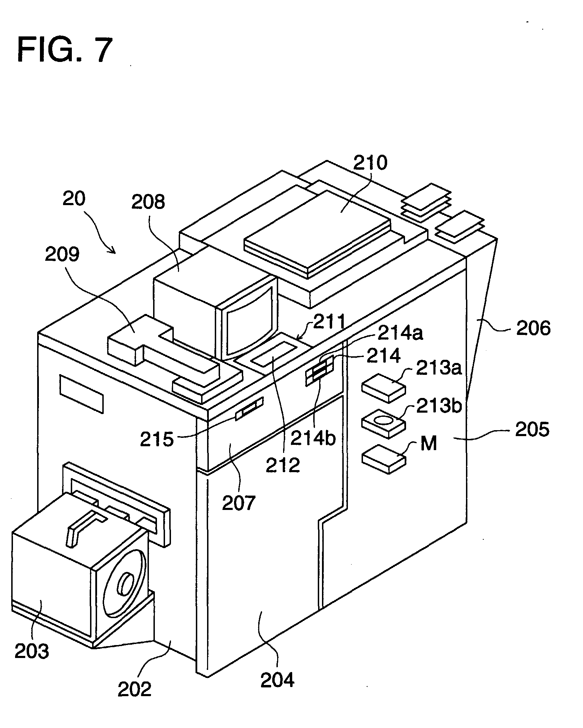

Fig. 7 is a perspective view of a print making apparatus (image forming apparatus) related to the present embodiment. In this case, as an example of the image forming apparatus, there is illustrated print making apparatus 20 wherein a light-sensitive material is exposed and developed to make a print. The invention, however, is not limited to this, and those which can make a print based on image information are acceptable, including a print making apparatus of an ink jet system and that of an electrophotographic system, among which the system using a light-sensitive material is especially preferable in the invention.

The print making apparatus 20 in the present embodiment is equipped, on the left side of its main body 202, with magazine loading section 203. Inside the main body 202, there are provided exposure processing section 204 which exposes a light-sensitive material representing a recording medium, and print making section 205 which processes the exposed light-sensitive material, then, dries it and makes a print, and a print thus made is ejected on tray 206 that is provided on the right side of the main body 202. Further, inside the main body 202, there is provided control section 207 on the upper position of the exposure processing section 204.

On the top of the main body 202, there is arranged CRT 208 which constitutes a display means that displays on an image plane an image of image information with which a print is supposed to be made. Film scanner section 209 representing an image reading section that reads a transmitted-light document is arranged on the left side of the CRT 208, and reflection document inputting device 210 is arranged on the right side thereof.

As a document to be read from film scanner section 209 and from reflection document inputting device 210, there is a photographic light-sensitive material, and as this photographic light-sensitive material, there are given a color negative film, a color reversal film, a black and white negative film and a black and white reversal film, on which image data obtained through image pick-up by an analog camera are recorded. It is possible for a film scanner of the film scanner section 209 to convert into digital information to make them to be image data. When the photographic light-sensitive material is a color paper, it is possible for a flat bed scanner of reflection document inputting device 210 to convert into image data.

Further, image transmission section 214 is provided at the position of control section of the main body 202. PC card 213a on which image data are recorded and floppy disk 213b in addition to the above-mentioned removable medium M (IC card) can be inserted in the image transmission section 214, and image data on the inserted recording medium are read.

On the front side of CRT 208, there is arranged operation section 211 on which information inputting means 212 is provided, and the information inputting means 212 is constituted, for example, with a touch panel.

On the main body 202, there is provided recording medium writing section 215 which has therein writing means K which writes image data in a recording medium on a magnetic recording medium or on an optical recording medium when outputting image data from removable medium M having therein image data to make a print.

As a recording medium on which image data are recorded, there are concretely given removable media such as a multi-media card, a memory stick, MD and CD-ROM, to which the invention is not limited.

Incidentally, though operation section 211, CRT 208, film scanner section 209, reflection document inputting device 210, image transmission section 214 and recording medium writing section 215 are solidly provided on the main body 202 to form the structure of the apparatus, either one or more of them can also be provided separately.

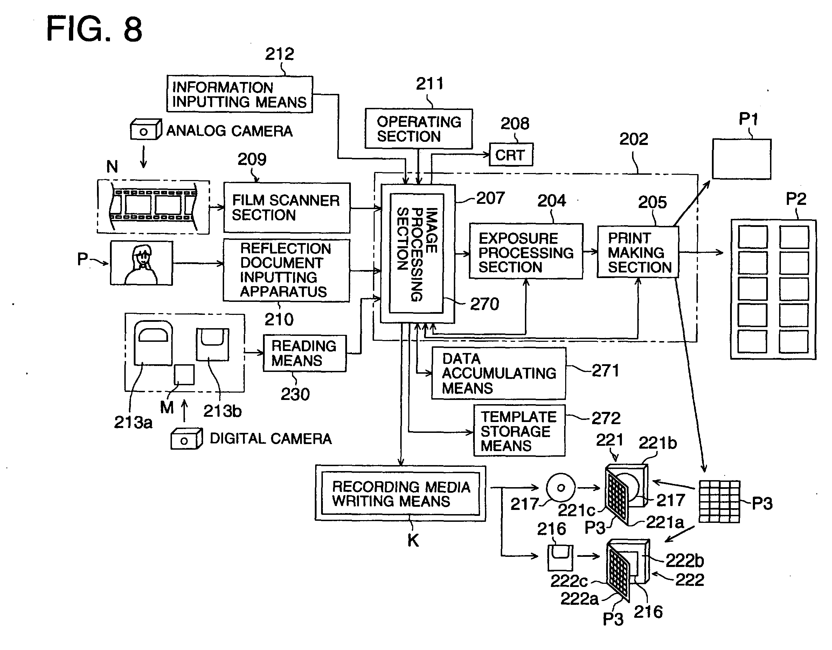

Fig. 8 is a block diagram showing constitution of a print making apparatus.

Control section 207 of the print making apparatus 20 conducts reading of document information from film scanner section 209 and reflection document inputting device 210 based on command information from information inputting means 212 to obtain image information, and displays it on CRT 208.

The print making apparatus 20 has therein data accumulating means 271 and template recording means 272. On the data accumulating means 271, there can be recorded and accumulated in succession the image data which are read from removable medium M and print order information corresponding to the image data (information about an image of the frame from which prints are made and the number of prints to be made, which will be described in detail later). From the film scanner section 209, there is inputted a frame image from developed negative film N obtained through development of a negative film obtained through image pick-up by an analog camera, and from reflection document inputting device 210, there is inputted a frame image from print P obtained by printing the frame image on a photographic paper.

In the template recording means 272, there are recorded in advance the data of at least one template for setting background images and composite areas, and it is set by operations of an operator to select the prescribed template from plural templates recorded in advance on template recording means 272, and image data are composed by the selected templates to make a print of the inputted image data. This composition made by templates is conducted through a known chromakey method.

The control section 207 has image processing section 270 which processes image information to form image information for exposure which is then sent to exposure processing section 204. In the exposure processing section 204, exposure of images is conducted on a light-sensitive material which is then sent to print making section 205 where the exposed light-sensitive material is processed and dried, thus a print is made.

Image transmission section 214 of the print making apparatus 20 is equipped with reading means 230 which reads image data such as removable medium M and transmits. This reading means 230 can read recorded image data from removable medium M inserted in the image transmission section 214, and it can transmit them to control section 207 constituted with a microcomputer.

On the print making apparatus 20, it is possible to conduct ordinary print P1, file print P2 and index print P3 based on image data recorded on removable medium M and print order information recorded to correspond to the image data.

Ordinary print P1 is one to make one sheet of print from a single piece of image data. It is also possible to set a prescribed composite area on a background image having prescribed pattern in this ordinary print P1, for example, and to make print P1 in an ordinary print size wherein a single frame image is composed on a composite area and a photo-frame is used for an ornament. By recording a single piece of image data on a single sheet of print P1, it is possible to make a favorite and specific print which can be put in a purse or in a commutation ticket holder, for example, in accordance with a customer's request.

File print P2 is one to make one sheet of large-sized file from plural frame images. Even in the case of this file print P2, it is also possible to set composite areas at 3 locations - 10 locations on a background image having prescribed pattern, for example, so that one frame image is composed on each of composite areas at 3 locations. Further, in the file print P2, the background may also be recorded with perforated lines which can make a favorite and specific print which can be put in a purse or a commutation ticket holder by cutting easily and neatly.

Index print P3 is one to make one sheet of print in prescribed size from all images, based on image data so that the print may be convenient for reordering of prints.

For printing images of the developed negative film or of the developed reversal film on the print making apparatus 20, the images are scanned by a film scanner of film scanner section 209, and are converted into digital information, and then, a print can be made through control section 207 in the same way.

Next, operations of the print order receiving device related to the present embodiment will be explained as follows, referring to Figs. 1 and 2. It is preferable that print order receiving device 10 related to the present embodiment is installed in a print wholesale distributor or a convenience store (hereinafter referred to as a wholesale distributor) where an image forming apparatus capable of forming images accurately based on image data is not installed. A customer who wishes to have prints brings to a wholesale distributor removable medium C on which image data corresponding to images picked up by a digital camera of the customer are recorded. Incidentally, as a removable medium, media of any types are acceptable provided that they are recording media which can store image data and are portable.

In this case, when an operator in the wholesale distributor turns on power supply switch 17 of print order receiving device 10, CPU 16 is initialized to be ready for operation, and an initial image plane is displayed on liquid crystal image plane 11.

Now, when an operator receives removable medium C representing a removable medium from a customer and inserts it in opening 12 of the print order receiving device 10, sensor 14a detects that the removable medium C is fixed on the position where the removable medium C can read image data, and sends signals showing that reading is possible. Responding to the signals showing that reading is possible, reading device 12 starts reading image data recorded on removable medium C. CPU 16 displays all images corresponding to image data recorded on removable medium C on one image plane of liquid crystal image plane 11 on an index basis, based on image data read (Fig. 1). Incidentally, when full size image data and thumbnail image data having an amount of data which is less that that of the full size image data are recorded on removable medium C for the same image, images are displayed based on thumbnail image data in the index display. When image data having a small data amount are not stored, it is also possible to display an index by generating image data having a small amount of data from full size image data for which the reading has started.

A customer (or an operator designated by the customer) who has observed such display selects images for which the customer wants to have prints by pressing an image plane of liquid crystal image plane 11. In this case, with regard to the image pressed on the liquid crystal image plane 11, if the color of a frame of the pressed image is changed by CPU 16, the selected image can be identified at a glance, which is convenient.

After completion of the selection, CPU 16 displays image composite image plane (not shown) on liquid crystal image plane 11 when the operator presses "NEXT" button 11a displayed on the lower portion on the right side on the liquid crystal image plane 11. Incidentally, when this button 11a is pressed, CPU 16 confirms that the operator has judged the selection to be correct, concerning that selection. This is the condition for recording, on removable medium, the image data corresponding to the selected image. On the image composite image plane, inputting is conducted only when a custom wishes a composite image, and when a composite image is desired, a template image recorded in print order receiving device 10 is displayed so that an operator can designate. Incidentally, the template image of this kind (or application) can be updated according to circumstances.

As print order information, there are given receiving information (a date of acceptance of print order and an acceptance number for print order), a date of print finishing, a print service charge, information regarding a wholesale distributor (identification information for a wholesale distributor, a name of a wholesale distributor, a mail address of a wholesale distributor and an encryption key used by a wholesale distributor), information regarding an image forming apparatus (a mail address relating to an image forming apparatus and an encryption key relating to an image forming apparatus), information regarding a web server (URL of a web server, ID and a password for access to a web server) in the case of using an online system described later, information regarding a customer (customer's name, telephone number, address, E-mail address), information regarding a print finish (a print size, quantity of prints that is information about how many prints for which image, an identification number of print or image data, types of prints or a name of category such as a post card or a business card, image rotation information, details to be printed on a backprint, an amount of protrusion in printing or border amount, cropping or trimming information, color information, LUT and filter information used in outputting images so as to affect image quality, a number of template image to be composed and insertion position in the case of composing images, LUT and filter information in the course of composition), information regarding image data (image file format such as JPEG, BMP and others, a path name of image data or location for storage of images, a file name of an image data file and a folder name of a folder), a name of an equipment with which an order information file is generated, an amount of money for order, and the order of priority such as an urgent printing or unurged printing, and desired pieces of information among the foregoing are inputted in the print order receiving device 10. Incidentally, with regard information that is specific to a wholesale distributor, data recorded in an unillustrated memory in advance may be used. The order information of this kind is recorded on a prescribed recording area in a text style in the form corresponding to image data (for example, in a way to designate the image number). In this case, a file name of image data, a customer's name and telephone number included in print order information may be used as identification information which specifies the corresponding image data.

Incidentally, if the identification number of a wholesale distributor is included in a file name of a file on which print order information is recorded or in a folder name of a folder, fears of confusion are reduced when forming images based on information coming from plural wholesale distributors on a single image forming apparatus, which is preferable. It is preferable that an input image plane for information which can be changed on the side of a wholesale distributor (for example, service charges) is different from that for information which can not be changed.

In the present embodiment, directives for recording image data and print order information on removable medium M (IC card) as a recording area are recorded in CPU 16 in advance. Incidentally, the recording area is not limited to this, and it may also be an external memory means or a memory medium connected to the print order receiving device. Therefore, after print order information is inputted, CPU 16 writes that print order information together with image data corresponding to the images for which the prints are desired, on removable medium M through recording device 15 so that the print order information and the image data are corresponded to each other. Namely, an operator does not input information concerning the recording area, and data are automatically recorded on removable medium M, which is timesaving for the operator in the case of order receiving. Thus, print ordering work is completed, and the operator can draw removable medium C (PC card) out of opening 12 to return it to a customer. Then, the customer mounts the removable medium on its own digital camera to pick up new images by erasing image data as occasion demands.

On the other hand, the removable medium M is drawn out of opening 13 of the print order receiving device 10, and conveyed to image forming apparatus 20 installed in the location other than the wholesale distributor. In the image forming apparatus 20, image data and print order information recorded on removable medium M are read by reading means 230 (Fig. 8), and prints for the ordered images are made. These prints are returned to the wholesale distributor together with the removable medium M to be given back to the customer.

Incidentally, when order information is written on removable medium M, if prescribed information included in the above-mentioned print order information, another information concerning print service such as, for example, the acceptance number for prints, customer's name/telephone number/address, print sizes, quantity of prints, print processing information (for example, print incompletion is recorded if prints are incomplete, while, print completion is recorded responding to signals from image forming apparatus 20 if prints are completed), and information concerning a print finishing date and print service charges, or some of the foregoing are properly displayed on liquid crystal image plane 11 and these pieces of information are automatically recorded on a built-in memory in the print order receiving device 10 serving as a backup area or on an external storage means or a storage medium connected, or if printing out is conducted on a separate printer, a fear of erroneous ordering is prevented and prints are handed over more smoothly.

To be more concrete, for example, when a customer makes inquiries at a wholesale distributor about print ordering which the customer itself made with the wholesale distributor, it is possible to know, at a glance on the side of the wholesale distributor, whether the prints are completed or not, by confirming the order control information, and it is possible to cope with customer request promptly.

Though removable medium M is greater in terms of capacity than removable medium C, if image data are recorded repeatedly, its residual amount is reduced. Therefore, when a recordable residual amount of removable medium M is reduced to be smaller than an amount of image data recorded on removable medium C, CPU 16 displays a message "No order is accepted because of insufficient capacity for new data" on liquid crystal image plane 11, and it may control to prohibit data writing on the removable medium M. In that case, it is preferable that image data or print order information recorded on removable medium M on the wholesale distributor side are made to be removable. Old data may either be removed automatically when new image data are recorded or be removed freely at the discretion of the wholesale distributor, based on information relating to time included in print order information recorded on removable medium M to be corresponded to image data, for example, on a date of order acceptance. In that case, however, it is preferable to display a message of "Old data are automatically removed" and thereby to remove data after waiting the confirmation of an operator.

Further, it is possible to prevent confusion of prints, if at least one of a file name of image data, a customer's name, a date of order acceptance and service contents is recorded on the rear side of the print made on image forming apparatus 20. Incidentally, it is preferable that information capable of specifying image data uniquely is recorded on the rear side of a print, and for that purpose, some pieces of information included in print order information may be combined to be used as specific information.

Incidentally, specifications of the print order receiving device in the present embodiment will be explained as follows.
Memory:
   SDRAM: 64 Mbit x 16 bit x 8 pieces = 64 Mbyte
   PROM: 64 Mbit x 16 bit x 4 pieces = 28 Mbyte
Display:
   LCD: 12.1 inch TFT color LCD panel
   VRAM: UMA system (using main memory)
   Resolution/number of colors: 600 x 800, 65, 536 colors (26 bit indication)
Operation section:
   Touch panel: Resisting membrane type analog touch panel, Electrolyzing power 10 bit (2024 x 1024)
   Screen scroll dial: EC11B15204 (made by ALPS) Rotary encoder
   General purpose switch: Right and left, Up/Down
Sound:
   Controller: Sound Blaster PRO Interchangeable chip
   Speaker: Built-in (monaural), Equipped with PHONE terminal on the outside,Connectable to headphone of stereo-mini-jack terminal
   Microphone: Built-in (microphone, Equipped with MIC terminal on the outside; Connectable to microphone of stereo-mini-jack terminal
Clock:
   RTC: Year, month, day, hour, minute, second and 114 byte general purpose SRAM
      Backup by lithium battery
External interface:
   PCMCIA: Equipped with two Type II slots
   Serial: Equipped with two D-Sub 9 pin connectors
   USB: Equipped with one USB dummy connector
   IrDA: Equipped with one IrDA sender-receiver module
Power supply:
   Supplied voltage: DC 9V - 18V
   Power consumption: 15W
Outside diameter:252 (W) x 356 (D) x 30 (H) mm (Height H does not include rubber legs.)
Weight: 1.7 kg
Language: Java
Hard disk: None

Since the print order receiving device in the present embodiment has the specifications stated above, it can be manufactured at a relatively low price to have a compact external form, and its rise time from the moment when the power supply is turned on is short.

In the aforesaid system to write image data and print order information on removable medium M and to convey it to image forming apparatus 20, there are problems that recordable capacity of the removable medium M is relatively small if it is compared with a hard disk, and the removable medium M is feared to be damaged when it is conveyed.

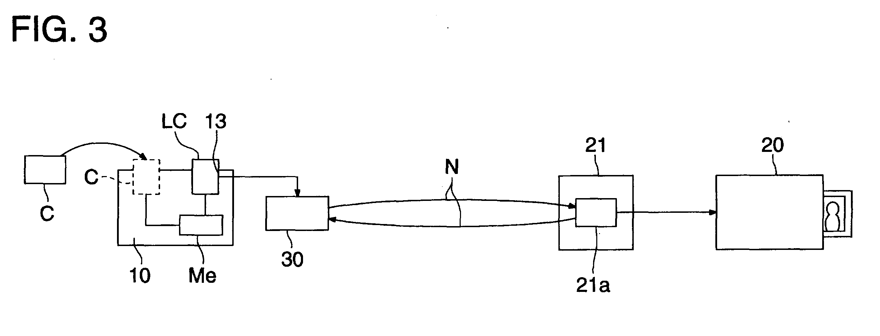

Therefore, in the second embodiment explained below, prints can be ordered through an online system without using removable medium M. Fig. 3 is a diagram for illustrating the second embodiment. In Fig. 3, print order receiving device 10 is common with the first embodiment shown in Figs. 1 and 2, but LAN card LC, in place of removable medium M, can be inserted in opening 13.

The LAN card LC is connected to dial-up router 30 to be capable of communicating, through internet (or public line) N, with server 21 connected with image forming apparatus 20.

In the present embodiment, there is recorded in advance on CPU 16 an address (URL) of file 21a of the server 21 representing a recording area for image data and print order information. Therefore, after print order information is inputted, the CPU 16 is connected with server 21 through internet N from LAN card LC and dial-up router 30, thus, image data corresponding to images for which prints are desired and print order data are transmitted to file 21a of server 21 in the form where the image data and the print order data are corresponded to each other. Namely, an operator does not need to input information concerning the recording area into print order receiving device 10, and data are transmitted rapidly and automatically to server 21, which is timesaving for the operator in the case of order receiving. Incidentally, if an arrangement is made so that the transmitted image data and print order information are recorded in memory Me provided on print order receiving device 10, contents of the transmitted data can be secured on the wholesale distributor side, which is convenient.

On the other hand, when data transmission is conducted, the server 21 having a communication function sends information of the data transmission (delivery notice) to print order receiving device 10 in the wholesale distributor through internet N. By receiving the delivery notice, the wholesale distributor who has sent data can confirm the data transmission, which is convenient. Further, the server 21 sends the recorded image data and print order information to image forming apparatus 20, responding to the request of the image forming apparatus 20. Based on this, the image forming apparatus 20 makes prints from the images. These prints are returned to the wholesale distributor who sent data so that the prints are given back to the customer.

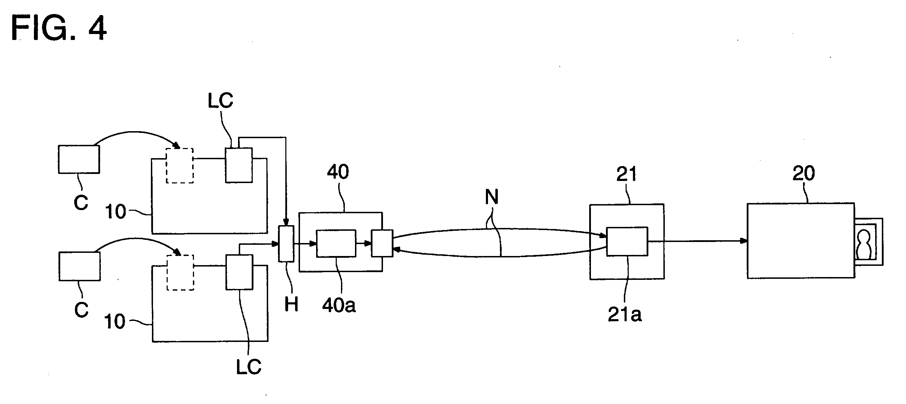

Fig. 4 is a diagram illustrating the third embodiment. In Fig. 4, two print order receiving devicees 10 are connected to one personal computer 40, and it is possible for the personal computer 40 to communicate with server 21 connected to image forming apparatus 20 through internet N.

In the third embodiment, print ordering can be carried out through internet N from an interoffice location where plural print order receiving devicees 10 and personal computer 40, for example, form a LAN. Image data and print order information inputted from print order receiving device 10 are temporarily accumulated in file 40a of personal computer 40, and then are transmitted, which is an only difference from the second embodiment, and all other points are the same as those in the second embodiment stated above.. Therefore, the explanation therefor will be omitted here. Incidentally, in each embodiment mentioned above, it is possible to input letters and graphics which are written by a customer on touch panel type liquid crystal image plane 11 and correspond to image data stored in removable medium C, in print order receiving device 10, then to compose them with image data, and to make a business card and a post card on an image forming apparatus.

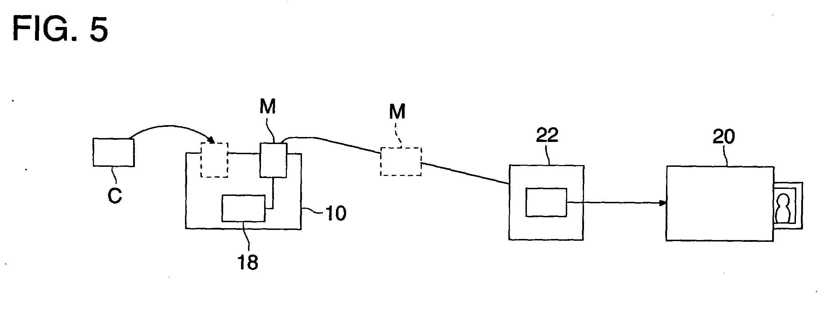

Fig. 5 is a diagram illustrating the fourth embodiment. Even in this embodiment, it is possible to compose images obtained through image pick-up with letters and graphics written by a customer as one of print information, and thereby to make a business card and a post card. As shown in Fig. 5, therefore, in the fourth embodiment, there is provided inputting equipment 18 which can read images such as letters and graphics written by a customer, which is different from the embodiment in Fig. 2. As images such as letters and graphics inputted from inputting equipment 18, there are given a customer's address, a name, a customer's place of employment, a telephone number, a facsimile number, an E-mail address, and URL, which are recorded in removable medium M in a form of images.

As inputting equipment 18, there are given a flat bed scanner which reads letters and graphics written by a customer on a sheet of paper, a digital still camera by which the sheet of paper is subjected to image pick-up, and a touch panel type image plane which can read images when the images are written by pen on a display panel.

As shown in Fig. 5, images such as letters recorded on removable medium M are read out temporarily by external personal computer 22, then, are composed with image data recorded on removable medium M, and can be outputted from image forming apparatus 20 in a form of a post card or a business card.

On the other hand, a part of images such as letters recorded on removable medium M may also be converted into text data in external personal computer 22. To be concrete, since an address, a name and a telephone number of a customer can be a part of the print order information stated above, it is possible to convert them into text data and thereby to same time for inputting those pieces of information manually in the wholesale distributor. Incidentally, conversion into text data may also be conducted in print order receiving device 10.

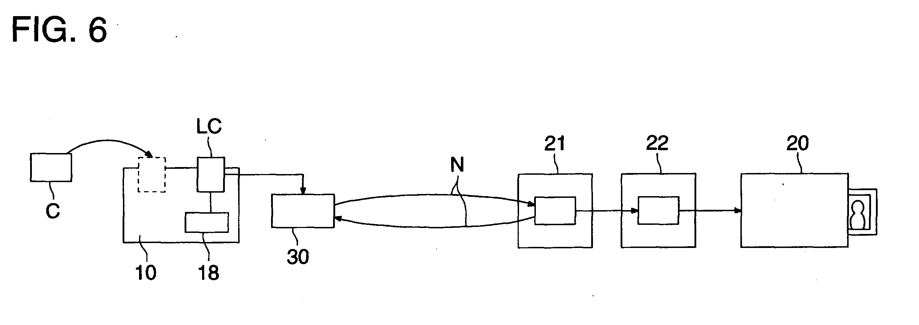

Fig. 6 is a diagram illustrating the fifth embodiment. In Fig. 6, print order receiving device 10 is the same as that in the embodiment in Fig. 5, but, in place of removable medium M, LAN card LC can be inserted in opening 13.

The LAN card LC is connected to dial-up router 30, and is capable of communicating with server 21 connected to image forming apparatus 20 through internet (or public line) N.

In this embodiment, images such as letters from inputting equipment 18 are transmitted to server 21 through internet N together with image data and print order information, and then, are composed with image data recorded on removable medium M in external personal computer 22, and can be outputted from image forming apparatus 20 in a form a post card or a business card. Other points are the same as those in the fourth embodiment stated above, thereby, the explanation therefor will be omitted here. In the examples shown in Figs. 3, 4 and 6, when sending image data and print order information through an internet, the image data and print order information may also be ciphered to be sent. It is preferable that data are compressed to be sent.

In the wholesale distributor, for example, if it is possible to make access to data base showing a history of print orders accepted in the past to date, it is possible to take actions promptly for inquiries from customers.

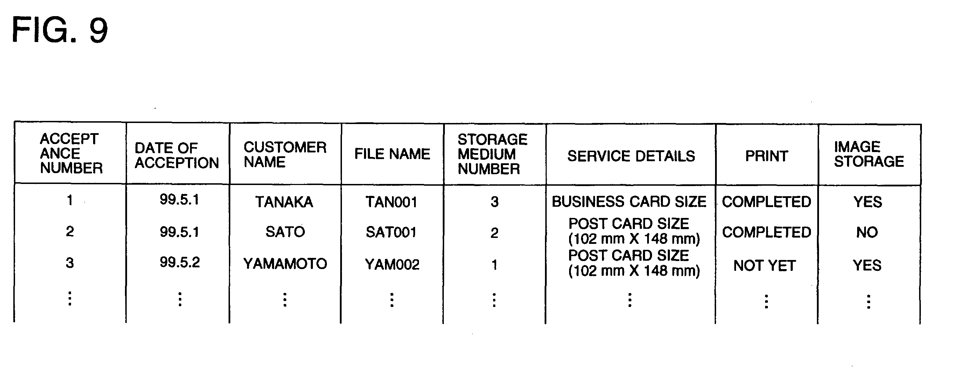

Fig. 9 is a diagram showing details of data base for controlling print orders. It is possible to input, as data, in this data base the print order information or other information, such as, for example, an acceptance number at a wholesale distributor, a date of acceptance, a customer name, a file name, a recording medium number, contents of service, print processing information and image preservation information. The data base of this kind may either be formed in a memory of print order receiving device 10, or be formed on server 21 on the part of image forming apparatus 20 to be accessible by print order receiving device 10 in case of need.

For example, when a customer (for example, Mr. Tanaka) inquires of a specific wholesale distributor about the present condition, after placing an order for prints with the specific wholesale distributor, if the data base stated above is established in the wholesale distributor, it can learn immediately that prints ordered by the customer (Mr. Tanaka) have already been completed, by retrieving the data base based on the name of the customer (Tanaka). Incidentally, an acceptance number may also be used for retrieval, because there sometimes is a case where plural customers have the same name.

On the other hand, when a customer (for example, Mr. Tanaka) places an order for prints with a specific wholesale distributor, and then, places an order again with the specific wholesale distributor later, it would be convenient if it is possible to make prints again based on image data inputted in the case of the previous ordering. In this case, if the data base includes information (image preservation information) showing whether or not image data are recorded in removable medium M or in server 21, it is possible to know promptly that image data of the customer (Mr. Tanaka) still exist, by retrieving the data base based on the customer name (Tanaka). Therefore, it is possible to tell the customer that it is not necessary for the customer to bring image data. Incidentally, an acceptance number may also be used for retrieval, because there sometimes is a case where plural customers have the same name.

Further, when a customer (for example, Mr. Tanaka) places an order for prints with a specific wholesale distributor, and then, requests the wholesale distributor to make prints urgently, when the image data of the customer are waiting to be conveyed to image forming apparatus 20 under the condition that the image data are recorded in removable medium M, it would be convenient if it is possible to know the correspondence between the image data of a certain customer and a removable medium out of plural removable media M in which the image data of the customer are recorded. In this case, if the number (2), for example, representing specific information specifying removable medium M on which the image data corresponding to the customer name are recorded is included in the data base, the specific information of removable medium M in which image data of the customer (Mr. Tanaka) are preserved, namely, the number (2) is known immediately. Therefore, it is possible to take actions such as conveying immediately the removable medium M having Number 1 to image forming apparatus 20. Incidentally, an acceptance number may also be used for retrieval, because there sometimes is a case where plural customers have the same name.

The invention has been explained above, referring to the embodiment, and the invention should not be construed to be limited to the embodiment, and modification or improvement can naturally be made appropriately. For example, print order receiving device 10 may also be operated by a customer who desires prints, without being operated by an operator of a wholesale distributor. Further, liquid crystal image plane 11 is not limited to that of a touch-up type, but it is possible to provide separately a key board or a reading equipment which can read characters written by a pen, so that information may be inputted through the key board or the reading equipment. Further, it would be convenient if an operator can select either a recording medium or an external server, as the recording area where image data are recorded.

## Claims

1. A print producing system, comprising:
a print order receiving device comprising
first reading means for reading image data from a first removable media in which the image data to be printed are stored, and
storing means for storing the image data read by the first reading means in a second removable media; and
a print producing apparatus comprising
second reading means for reading the image data stored in the second removable media, and
printing means for producing a print based on the image data read by the second reading means.

2. The print producing system of claim 1, wherein the print order receiving device stores print order information in the second removable media and further stores print non-conducted information in association with the image data corresponding to the print order information.

3. The print producing system of claim 1, wherein the print producing apparatus stores print-conducted information in the second removable media in association with the image data for which a print is produced.

4. The print producing system of claim 2, wherein the print order information includes at least one of print finishing information and customer information.

5. The print producing system of claim 4, wherein the print order information includes the print finishing information and the print finishing information is information regarding at least one of finishing color and finishing image quality.

6. The print producing system of claim 1, wherein the print order receiving device further comprises data forming means for converting a handwritten letter or a handwritten figure used for a print order into image data representing the handwritten letter or the handwritten figure, and the storing means stores the image data representing the handwritten letter or the handwritten figure in correlation with the image data stored in the second removable media.

7. The print producing system of claim 1, further comprising:
a memory to store a data base to administrate the print order information,
wherein in the data base, information regarding a customer name and/or an order receipt number is stored in correlation with information as to whether there are stored image data for which a print has been already produced in response to a print producing order of the customer.

8. The print producing system of claim 1, further comprising:
a memory to store a data base to administrate the print order information,
wherein in the data base, information regarding a customer name and/or an order receipt number is stored in correlation with information as to whether a print is produced based on the image data for which the customer requests to produce a print.

9. The print producing system of claim 1, further comprising:
a memory to store a data base to administrate the print order information,
wherein in the data base, information regarding a customer name and/or an order receipt number is stored in correlation with discriminating information of the second removable media in which the image data ordered to be printed by the customer are stored.

10. A print receiving device, comprising:
reading means for reading image data from a media in which image data are stored;
indicating means for indicating images based on the image data read by the reading means;
selecting means for selecting an image to be printed from the images indicated by the indicating means;
inputting means for inputting print order information corresponding to the image selected by the selecting means;
transmitting means for transmitting at least one of the image data corresponding to the image selected by the selecting means and the print order information inputted by the inputting means to an external communicating apparatus; and
receiving means for receiving from the external communication apparatus receipt information that the external communication apparatus has received at least one of the image data and the print order information.

11. The print receiving device of claim 10, wherein the print order information includes at least one of print finishing information and customer information.

12. The print receiving device of claim 10, wherein the print order information includes the print finishing information and the print finishing information is information regarding at least one of finishing color and finishing image quality.

13. The print receiving device of claim 10, wherein the print order receiving device further comprises data forming means for converting a handwritten letter or a handwritten figure used for a print order into image data representing the handwritten letter or the handwritten figure, and the storing means stores the image data representing the handwritten letter or the handwritten figure in correlation with the image data stored in the second removable media.

14. The print receiving device of claim 10, further comprising:
a memory to store a data base to administrate the print order information,
wherein in the data base, information regarding a customer name and/or an order receipt number is stored in correlation with information as to whether there are stored image data for which a print has been already produced in response to a print producing order of the customer.

15. The print receiving device of claim 10, further comprising:
a memory to store a data base to administrate the print order information,
wherein in the data base, information regarding a customer name and/or an order receipt number is stored in correlation with information as to whether a print is produced based on the image data for which the customer requests to produce a print.

16. The print receiving device of claim 10, wherein the external communication apparatus comprises a transmitting device to transmit the receipt information when the print receiving device transmits at least one of the image data and the print order information.
